# FASCICULE DE BREVET EUROPEEN

(11) **EP 0 980 127 B1**
(45) Date de publication et mention de la délivrance du brevet: **02.07.2008**
(21) Numéro de dépôt: 99402030.3
(22) Date de dépôt: 10.08.1999
(51) Int. Cl.: H02G 3/14

(54) **Dispositif d'habillage porte étiquette pour appareillages électriques**
Abdeckungsvorrichtung mit Etikettehalter für elektrische Geräte
Cover device with label holder for electrical apparatus

(30) Priorité: 12.08.1998 FR 9810331
(43) Date de publication de la demande: 16.02.2000
(73) Titulaire: LEGRAND FRANCE, 87000 Limoges (FR); LEGRAND SNC, 87000 Limoges (FR)
(72) Inventeur: Thirouin, Stéphane, 75015 Paris (FR)
(74) Mandataire: Santarelli

(56) Documents cités:
- EP-A- 0 344 641
- DE-U- 9 006 901
- FR-A- 2 658 027

## Description

L'invention concerne le domaine des dispositifs d'habillage pour appareillages électriques tels qu'interrupteurs, prises ou autres, et plus particulièrement les habillages du genre porte étiquette comportant un enjoliveur porte étiquette dans un cadre périphérique.

Généralement, les habillages porte étiquette pour appareillages électriques comportent un cadre périphérique destiné à être monté sur un boîtier d'appareillage électrique, un enjoliveur qui vient s'emboîter dans le cadre périphérique et un organe protège étiquette transparent qui vient se monter sur l'enjoliveur. L'étiquette est placée entre l'enjoliveur et l'organe protège étiquette.

Selon un mode de réalisation connu d'un habillage porte étiquette, l'enjoliveur comporte une paroi de façade et des parois de côté sur sa périphérie. L'enjoliveur peut être décomposé en deux zones : une zone d'accès à l'appareillage et une zone d'étiquetage. La surface de la paroi de façade de la zone d'étiquetage est en retrait par rapport à la surface de la paroi de façade de la zone d'accès à l'appareillage. La séparation entre les deux zones de la paroi de façade est marquée par un rebord en relief. Les parois de côté de la zone d'étiquetage sont en retrait par rapport aux parois de côté de la zone d'accès à l'appareillage et comportent, sur deux côtés opposés de l'enjoliveur, une échancrure débouchant vers la partie arrière de l'enjoliveur. La séparation entre les deux zones des parois de côté est marquée par un rebord en relief. La surface de la paroi de façade de la zone d'étiquetage est munie, sur sa partie centrale, d'un creux prévu pour recevoir l'étiquette. Le protège étiquette comporte une paroi de façade et des parois de côté. Deux parois de côté opposées du protège étiquette sont munies d'un crochet. Le protège étiquette coiffe l'enjoliveur sur sa zone d'étiquetage en retrait en s'encliquetant sur celui-ci par le biais des deux crochets qui viennent s'engager dans les deux échancrures des parois de côté de l'enjoliveur. Lorsque l'enjoliveur n'est pas monté dans le cadre périphérique, l'utilisateur a accès aux crochets du protège étiquette montée sur l'enjoliveur car les deux échancrures de l'enjoliveur sont débouchantes vers la partie arrière de celui-ci. Il peut décrocher le protège étiquette de l'enjoliveur sans avoir recours à un outil. Le protège étiquette est transparent sur sa partie centrale qui est prévue pour être en vis à vis avec le creux de la paroi de façade de l'enjoliveur. Il est dépoli autour de cette partie centrale afin de cacher les deux échancrures ménagées dans l'enjoliveur.

Les habillages protège étiquette du type tel que décrits ci-dessus ne donne pas pleinement satisfaction.

En effet, l'enjoliveur comporte des rebords en relief délimitant la zone d'étiquetage en retrait et des échancrures permettant l'encliquetage du protège étiquette, lesquels rebords et échancrures sont visibles par l'utilisateur de l'appareillage si le protège étiquette n'est pas en place. Les enjoliveurs prévus pour les habillages d'appareillage avec protège étiquette, qui ne peuvent pas être utilisés sans leur protège étiquette, doivent donc être spécifiques. Il faut donc prévoir une fabrication et un référencement propre pour les enjoliveurs des habillages protège étiquette, ce qui induit des frais de fabrication et de gestion.

De plus, il est nécessaire que la bordure du protège étiquette, autour de sa partie transparente, soit opaque ou translucide, ce qui réduit la surface d'affichage disponible.

Enfin, l'organe protège étiquette est difficile à placer sur l'enjoliveur ou à ôter de celui-ci car les crochets en plastique sont généralement, de par leur taille, difficiles à manipuler à la main. Il est généralement constitué de polycarbonate, matériau ayant de bonnes caractéristiques optiques et de résistance aux chocs mais étant rigide, ce qui entraîne des risques de rupture lors de sa manipulation. En effet, le protège étiquette doit pouvoir se déformer lors de l'encliquetage ou du décliquetage du protège étiquette. De plus, la rigidité du protège étiquette rend l'insertion de l'étiquette difficile. Il est également malaisé de retirer l'étiquette sans démonter l'enjoliveur pour en décrocher le protège étiquette.

Un des buts de la présente invention est de proposer un protège étiquette pour habillage d'appareillage électrique qui soit facile à mettre en place et à ôter de son support et qui ne risque pas de se briser lors de ces manipulations. L'étiquette doit être facile à insérer et à retirer de l'habillage protège étiquette.

Un autre but de l'invention est de proposer un habillage pour appareillage électrique qui puisse être utilisé aussi bien comme habillage avec protège étiquette que comme habillage sans protège étiquette.

Afin de répondre à ces objectifs, la présente invention a pour objet un dispositif pour appareillage électrique comportant un cadre périphérique destiné à être monté sur un boîtier d'appareillage électrique et muni d'un logement avec des parois latérales, un enjoliveur apte à s'emboîter dans ledit logement et présentant une zone d'accès à l'appareillage électrique et une zone d'étiquetage, un protège étiquette apte à coiffer la zone d'étiquetage de l'enjoliveur, caractérisé par l'aménagement, sur partie au moins de parois de côté de la zone d'étiquetage de l'enjoliveur, d'un dégagement déterminant des portées en retrait par rapport à une arête périphérique du panneau de façade de l'enjoliveur pour coopérer avec des organes de fixation ménagés sur une partie au moins des parois de côté du protège étiquette.

Un avantage de l'habillage pour appareillage électrique selon l'invention consiste en ce que les portées de l'enjoliveur coopérant avec les organes de fixation du protège étiquette se trouvant en retrait du panneau de façade de l'enjoliveur, l'enjoliveur n'est pas spécifique à un usage avec protège étiquette. De plus, les organes de fixation coopérant avec les portées de l'enjoliveur en retrait de l'arête du panneau de façade, ils n'empiètent pas sur la surface d'affichage du protège étiquette.

De préférence, le dispositif d'habillage pour appareillage électrique selon l'invention est caractérisé en ce que les organes de fixation ménagés sur partie au moins des parois latérales du protège étiquette sont raccordés au panneau de façade du protège étiquette par une zone amincie destinée à se placer en regard de l'arête périphérique saillante de l'enjoliveur.

Selon une disposition avantageuse de l'invention, le jeu compris entre les parois latérales du logement et l'arête périphérique du panneau de façade de l'enjoliveur est sensiblement égal à l'épaisseur de la zone amincie des parois du protège étiquette.

Préférentiellement, l'habillage pour appareillages électriques selon l'invention est caractérisé en ce que l'épaisseur de la zone amincie du protège étiquette est sensiblement de 0,2 mm.

Un avantage de l'habillage pour appareillages selon l'invention consiste dans le fait que l'enjoliveur peut être monté dans le cadre périphérique avec ou sans son protège étiquette, sans qu'il comporte pour autant un jeu inhabituel entre les bords du logement du cadre périphérique et le bord de la façade de l'enjoliveur.

De préférence, le dispositif d'habillage pour appareillages électriques selon l'invention est caractérisé en ce que les parois de côté du protège étiquette comprennent deux parois latérales et une paroi transversale.

De préférence, le dispositif d'habillage pour appareillages électriques selon l'invention est caractérisée en ce que les organes de fixation du protège étiquette sont ménagés sur les parois latérales, sur des zones de raccordement de ces parois latérales à la paroi transversale et sur une zone au milieu de la paroi transversale.

Avantageusement, le dispositif d'habillage pour appareillage électrique selon l'invention est caractérisée en ce que la paroi transversale du protège étiquette comporte une zone allégée d'épaisseur variable croissant à partir de la zone amincie.

Selon un mode de réalisation avantageux de l'habillage pour appareillages électriques objet de l'invention, la zone allégée s'étend sur des zones de part et d'autre d'une étroite bande au milieu de la paroi transversale, jusqu'aux zones de raccordement adjacentes aux parois latérales.

Un avantage de la structure du protège étiquette selon l'invention consiste en ce qu'elle permet au protège étiquette de pouvoir être déformé pour être monté sur l'enjoliveur sans risquer d'être détérioré.

Un autre avantage de l'habillage selon l'invention consiste dans le fait que le protège étiquette est facile à insérer sur l'enjoliveur et à retirer de celui-ci quand il est démonté du cadre périphérique.

Avantageusement, l'habillage pour appareillages électriques selon l'invention est caractérisé en ce que la face interne du panneau de façade du protège étiquette comporte au moins un téton saillant écartant le panneau de la surface du panneau de façade de l'enjoliveur d'une distance suffisante pour faciliter l'insertion d'une étiquette et maintenant celle-ci une fois mise en place.

Les caractéristiques et avantages de l'invention ressortiront d'ailleurs de la description qui va suivre à titre d'exemple en référence aux dessins annexés où :
La figure 1 est une vue en perspective du cadre périphérique d'un habillage d'appareillage électrique ;
la figure 2 est une vue en perspective d'un enjoliveur et d'un protège étiquette ;
la figure 3 est une vue semblable mais vue de côté arrière ;
la figure 4 est une vue de face du protège étiquette ;
la figure 5 est une vue en coupe longitudinale selon le plan V-V de la figure 4 ;
la figure 6 est une vue en coupe transversale suivant le plan VI-VI de la figure 4.

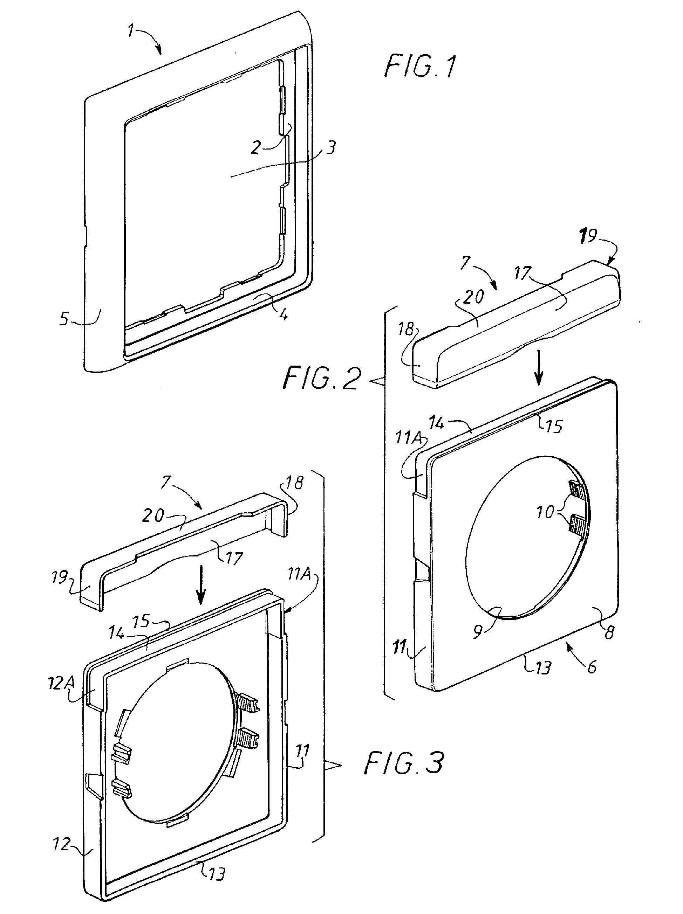

Suivant la forme de réalisation choisie et représentée, un cadre périphérique I (figure 1) comporte un fond 2 présentant un large évidement 3 de forme générale rectangulaire. Ce fond est destiné à prendre appui sur un boîtier d'appareillage (non représenté). Autour de l'évidement et perpendiculairement au fond 2, des parois latérales délimitent un logement 4, ces parois étant raccordées au boîtier par un encadrement 5 présentant un profil en arc de cercle.

Le logement 4 est adapté à recevoir par emboîtement avec jeu un enjoliveur 6 (figures 2 et 3) auquel peut s'associer un protège étiquette 7. L'enjoliveur présente un panneau de façade 8 dans lequel est ménagé un évidement 9 d'accès à l'appareillage (non représenté) avec des griffes d'accrochage 10 sur celui-ci.

Le panneau de façade 8 est entouré de parois de côté 11 à 14 adaptées à s'emboîter dans le cadre périphérique 1, à savoir des parois latérales 11, 12, une paroi inférieure 13 et une paroi supérieure 14.

Sur la totalité de la paroi supérieure 14 et de parties adjacentes 11A et 12A des parois latérales 11, 12 est ménagé selon l'invention un dégagement déterminant des portées en retrait par rapport à l'arête périphérique 15 du panneau de façade. Il est formé ainsi à la périphérie du panneau de façade des arêtes se trouvant en saillie au-dessus de ces portées en retrait qui demeurent invisibles pour un observateur regardant de face le panneau 8.

Comme il est visible notamment sur la figure 3, ces portées en retrait son déterminées par un amincissement et un léger décalage vers l'intérieur de la paroi transversale supérieure 14 et des deux portions adjacentes 11A et 12A des deux parois latérales. Le retrait de ces trois portées par rapport à l'arête périphérique 15 est de l'ordre du millimètre dans l'exemple considéré.

C'est en regard de la zone ainsi dégagée de l'enjoliveur 8 que se trouve présenté, comme indiqué sur les figures 2 et 3, le protège étiquette 7.

Cette zone constituant la zone d'étiquetage occupe dans l'exemple considéré la partie supérieure de l'enjoliveur se trouvant donc au-dessus de l'ouverture 9 d'accès à l'appareillage concerné. On notera cependant en considérant la figure 2, que lorsque le protège étiquette n'est pas mis en place, rien ne distingue la zone d'étiquetage du reste de l'enjoliveur en raison de la continuité sauvegardée de l'arête périphérique du panneau de façade derrière laquelle se trouvent en retrait, donc parfaitement dissimulés, les dégagements 11A, 12A et 14 selon l'invention.

Le protège étiquette, constitué par une pièce transparente servant à maintenir et à protéger une étiquette, est adapté à coiffer par coulissement la zone d'étiquetage de l'enjoliveur. Il présente à cet effet un panneau de façade 17 formant écran de protection pour l'étiquette (non représentée) et trois parois de côtés 18, 19, 20. De part et d'autre du panneau de façade 17 les parois ou branches latérales 18, 19 sont destinées à assurer la fixation par coopération avec des éléments complémentaires d'accrochage ménagés à cet effet sur la tranche de l'enjoliveur. La paroi transversale 20 est adaptée à coopérer avec la paroi transversale 14 de la zone d'étiquetage comme on va le voir ultérieurement.

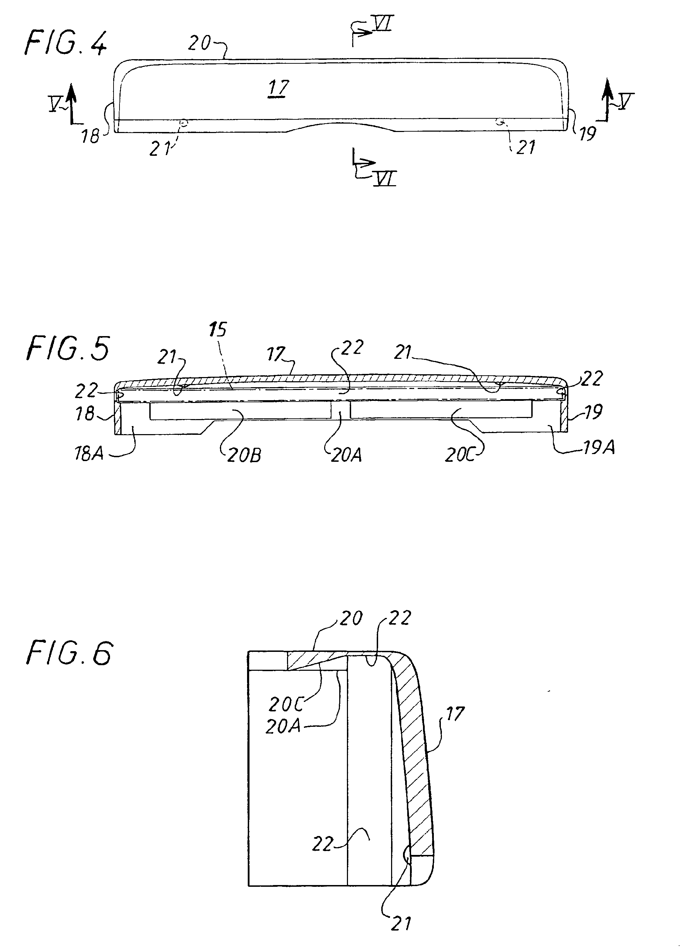

On se reportera aux figures 4 à 6 pour un examen détaillé du protège étiquette que l'on retrouve vu de face sur la figure 4. Dans la vue en coupe longitudinale de la figure 5, on notera la forme légèrement bombée du panneau de façade 17, avec sur sa face interne la présence de deux tétons saillants 21 constituants des moyens dits d'entretoise et de maintien sur lesquels on reviendra encore ci-après. Ce panneau de façade se trouve raccordé aux deux branches ou parois latérales 18, 19 par une zone amincie 22 qui constitue un moyen de liaison caractéristique de l'invention. Alors que l'épaisseur courante du panneau de façade 17 ainsi que des parois latérales 18, 19 est de l'ordre du millimètre dans l'exemple considéré, dans la zone amincie de liaison l'épaisseur se trouve réduite à une valeur d'environ 0,2 millimètre dans le cadre de l'exemple considéré. Cette valeur d'épaisseur réduite correspond selon l'invention au jeu normalement ménagé entre la plaque enjoliveur 8 et son logement 4, qui est classiquement inférieur à 0,5 mm. Les parois latérales du logement 4 du cadre périphérique 1 sont parallèles à la périphérie de la paroi de façade 8 de l'enjoliveur 6.

C'est cette zone amincie de liaison qui est destinée à se placer en regard de la partie saillante 15 de l'arête de l'enjoliveur, comme indiqué en trait mixte sur la figure 5. La zone d'amincissement 22 détermine en d'autres termes, entre les parties courantes d'épaisseur sensiblement constantes de la façade 17 et des branches 18, 19, une rainure d'emboîtement adaptée à coiffer l'arête saillante 15 de la zone d'étiquetage de l'enjoliveur.

Cependant, selon un autre aspect de l'invention, l'épaisseur de paroi choisie pour constituer un bon accrochage du protège étiquette sur l'arête saillante de la zone d'étiquetage (ici environ 1 millimètre) n'est pas maintenue sur toute l'étendue du protège étiquette, en particulier sur sa paroi transversale 20. Il s'est avéré avantageux au contraire de ménager un allégement de la pièce en adoptant le profil effilé illustré à la figure 6 sur la plus grande partie de la paroi transversale 20. Dans ladite zone allégée, l'épaisseur de la paroi transversale 20 est variable en croissant à partir de la zone amincie 22. Dans le présent exemple, la zone allégée se présente plus précisément sur les zones indiquées 20B et 20C sur la figure 5 de part et d'autre d'une étroite bande 20A au milieu jusqu'aux zones 18A, 19A limitées à proximité des branches 18, 19. Les zones de fixation par accrochage se trouvent limitées ainsi aux branches 18, 19, aux zones de raccordement 18A, 19A de ces branches à la paroi transversale 20 et au milieu de la paroi 20 dans la zone repérée 20A.

Un tel agencement s'est avéré particulièrement avantageux pour la fabrication et l'usage du protège étiquette.

La fabrication de la structure décrite a pu être réalisée avec succès par moulage dans une matière transparente du genre polycarbonate ou du genre polypropylène ou polyéthylène en conservant, malgré la rigidité du matériau, une souplesse suffisante pour une mise en place commode et sans problème par simple engagement à coulissement à partir du bord transversal 14 comme indiqué par la flèche aux figures 2 et 3. L'enjoliveur équipé du protège étiquette se monte avec serrage dans son logement, l'épaisseur de la bande de liaison constituée par la zone amincie 22 correspondant, comme on l'a déjà noté, au jeu normalement ménagé entre la plaque enjoliveur 8 et son logement 4.

Les tétons saillants 21 ménagés sur la face interne du panneau de façade 17 du protège étiquette servent de moyen d'entretoise et de maintien : ils écartent en effet le panneau 17 de la surface de l'enjoliveur d'une distance suffisante pour faciliter l'insertion d'une étiquette tout en assurant par ailleurs un maintien de celle-ci une fois mise en place.

Les modes de réalisation de l'invention décrits précédemment et représentés sur les figures ne sont nullement limitatifs et peuvent donner lieu à des variantes.

Par exemple, le dégagement déterminant des portées en retrait 11A, 12A, 14 par rapport à l'arête périphérique 15 du panneau de façade peut éventuellement être remplacé par une rainure par exemple à mi-hauteur des parois de côté de la tranche de l'enjoliveur, définissant pareillement des moyens d'accrochage sur la tranche de l'enjoliveur.

A titre de variante, la paroi transversale 20 du protège étiquette pourrait être supprimée sans poser de difficulté d'accrochage de celui-ci. Dans ce cas, la paroi transversale 14 de l'enjoliveur ne comporterait pas de portées en retrait par rapport à l'arête périphérique 15 du panneau de façade 8.

L'enjoliveur décrit dans le mode de réalisation de l'invention qui précède est sensiblement parallélépipédique. L'enjoliveur et le protège étiquette pourraient tout aussi bien avoir une autre forme sans changer leur mode d'accrochage et de montage. Par exemple, l'enjoliveur pourrait avoir une zone d'étiquetage en demi-cercle ou plus généralement semi-circulaire dont une seule paroi de côté incurvée servirait à l'accrochage du protège étiquette.

## Revendications

1. Dispositif d'habillage pour appareillage électrique comportant un cadre périphérique destiné à être monté sur un boîtier d'appareillage électrique et muni d'un logement avec des parois latérales, un enjoliveur apte à s'emboîter dans ledit logement et présentant une zone d'accès à l'appareillage électrique et une zone d'étiquetage, un protège étiquette apte à coiffer la zone d'étiquetage de l'enjoliveur, **caractérisé par** l'aménagement, sur partie au moins de parois de côté (11, 12, 14) de la zone d'étiquetage de l'enjoliveur (6), d'un dégagement déterminant des portées en retrait (11A, 12A, 14) par rapport à une arête périphérique (15) de l'enjoliveur (6) pour coopérer avec des organes de fixation ménagés sur partie au moins de parois de côté (18, 19, 20) du protège étiquette (7).

2. Dispositif d'habillage pour appareillage électrique selon la revendication 1, **caractérisé en ce que** les organes de fixation ménagés sur partie au moins des parois de côté (18, 19, 20) du protège étiquette sont raccordés au panneau de façade (17) du protège étiquette par une zone amincie (22) destinée à se placer en regard de l'arête périphérique (15) saillante de l'enjoliveur (6).

3. Dispositif d'habillage pour appareillage électrique selon la revendication 2, **caractérisé en ce que** le jeu compris entre les parois latérales du logement (4) et l'arête périphérique (15) de l'enjoliveur (6) est sensiblement égal à l'épaisseur de la zone amincie (22) des parois du protège étiquette.

4. Dispositif d'habillage pour appareillage électrique selon la revendication 3, **caractérisé en ce que** l'épaisseur de la zone amincie (22) du protège étiquette est sensiblement de 0,2 mm.

5. Dispositif d'habillage pour appareillage électrique selon la revendication 2, **caractérisé en ce que** les parois de côté du protège étiquette comprennent deux parois latérales (18, 19) et une paroi transversale (20).

6. Dispositif d'habillage pour appareillage électrique selon la revendication 5, **caractérisé en ce que** les organes de fixation du protège étiquette sont ménagés sur les parois latérales (18, 19), sur des zones de raccordement (18A, 19A) desdites parois latérales à la paroi transversale (20) et sur une zone (20A) au milieu de la paroi transversale (20).

7. Dispositif d'habillage pour appareillage électrique selon la revendication 5, **caractérisé en ce que** la paroi transversale (20) du protège étiquette (7) comporte une zone allégée d'épaisseur variable croissant à partir de la zone amincie (22).

8. Dispositif d'habillage pour appareillage électrique selon la revendication 7, **caractérisé en ce que** la zone allégée s'étend sur des zones (20B, 20C) de part et d'autre d'une étroite bande (20A) au milieu de la paroi transversale (20), jusqu'aux zones de raccordement (18A, 19A) adjacentes aux parois latérales (18, 19).

9. Dispositif d'habillage pour appareillage électrique selon l'une des revendications précédentes, **caractérisé en ce que** la face interne du panneau de façade (17) du protège étiquette (7) comporte au moins un téton saillant (21) écartant le panneau (17) de la surface du panneau de façade (8) de l'enjoliveur d'une distance suffisante pour faciliter l'insertion d'une étiquette et maintenant celle-ci une fois mise en place.

## Claims

1. A trim arrangement for an electrical apparatus comprising a peripheral frame intended to be mounted on an electrical apparatus casing and provided with a housing having lateral walls, an embellisher adapted to engage into said housing and having a region for access to the electrical apparatus and a labelling region, and a label protector adapted to fit over the labelling region of the embellisher, **characterised by** the arrangement on part at least of side walls (11, 12, 14) of the labelling region of the embellisher (6) of a recess defining set-back portions (11A, 12A, 14) with respect to a peripheral edge (15) of the embellisher (6) for co-operating with fixing members provided on part at least of side walls (18, 19, 20) of the label protector (7).

2. A trim arrangement for an electrical apparatus according to claim 1 **characterised in that** the fixing members provided on part at least of the side walls (18, 19, 20) of the label protector are connected to the face panel (17) of the label protector by a reduced-thickness region (22) intended to be placed in facing relationship with the projecting peripheral edge (15) of the embellisher (6).

3. A trim arrangement for an electrical apparatus according to claim 2 **characterised in that** the clearance between the lateral walls of the housing (4) and the peripheral edge (15) of the embellisher (6) is substantially equal to the thickness of the reduced-thickness region (22) of the walls of the label protector.

4. A trim arrangement for an electrical apparatus according to claim 3 **characterised in that** the thickness of the reduced-thickness region (22) of the label protector is substantially 0.2 mm.

5. A trim arrangement for an electrical apparatus according to claim 2 **characterised in that** the side walls of the label protector comprise two lateral walls (18, 19) and a transverse wall (20).

6. A trim arrangement for an electrical apparatus according to claim 5 **characterised in that** the fixing members of the label protector are provided on the lateral walls (18, 19), on regions (18A, 19A) for connecting said lateral walls to the transverse wall (20) and on a region (20A) in the middle of the transverse wall (20).

7. A trim arrangement for an electrical apparatus according to claim 5 **characterised in that** the transverse wall (20) of the label protector (7) comprises a lightened region of variable thickness increasing from the reduced-thickness region (22).

8. A trim arrangement for an electrical apparatus according to claim 7 **characterised in that** the lightened region extends over regions (20B, 20C) on respective sides of a narrow strip (20A) at the middle of the transverse wall (20) to the connecting regions (18A, 19A) adjacent to the lateral walls (18, 19).

9. A trim arrangement for an electrical apparatus according to one of the preceding claims **characterised in that** the internal face of the face panel (17) of the label protector (7) comprises at least one projecting teat (21) spacing the panel (17) from the surface of the face panel (8) of the embellisher at a sufficient distance to facilitate insertion of a label and holding same once set in place.

## Patentansprüche

1. Abdeckvorrichtung für Installationsgeräte mit einem umlaufenden Rahmen, der dazu bestimmt ist, auf einem Gehäuse eines Installationsgeräts angebracht zu werden, und mit einer Aufnahme mit Seltenwänden versehen ist, einer Zlerkappe, die in die Aufnahme eingesteckt zu werden vermag und einen Gerätezugangsbereich und einen Kennzeichnungsbereich aufweist, einem Etikettenschutz, der den Kennzelchnungsbereich der Zierkappe zu überdecken vermag,
**dadurch gekennzeichnet, dass** auf wenigstens einem Teil der Seitenwände (11, 12, 14) des Kennzelchnungsbereichs der Zlerkappe (6) eine Aussparung ausgebildet Ist, die bezüglich einer Umfangskante (15) der Zlerkappe (6) zurückversetzte Auflageflächen (11A, 12A, 14) definiert, um mit Befestigungsorganen zusammenzuwirken, die auf wenigstens einem Teil der Seitenwände (18, 19, 20) des Etikettenschutzes (7) ausgebildet sind.

2. Abdeckvorrichtung für Installationsgeräte nach Anspruch 1,
**dadurch gekennzeichnet, dass** die auf wenigstens einem Teil der Seitenwände (18, 19, 20) ausgebildeten Befestigungsorgane des Etikettenschutzes mit der Stirnwand (17) des Etikettenschutzes durch einen verjüngten Bereich (22) verbunden sind, der dazu bestimmt ist, gegenüber der vorspringenden Umfangskante (15) der Zierkappe (6) angeordnet zu sein.

3. Abdeckvorrichtung für Installationsgeräte nach Anspruch 2,
**dadurch gekennzeichnet, dass** das Spiel zwischen den Seltenwänden der Aufnahme (4) und der Umfangskante (15) der Zierkappe (6) Im Wesentlichen der Dicke des verjüngten Bereichs (22) der Wände des Etikettenschutzes entspricht.

4. Abdeckvorrichtung für Installationsgeräte nach Anspruch 3,
**dadurch gekennzeichnet, dass** die Dicke des verjüngten Bereichs (22) des Etikettenschutzes im Wesentlichen 0,2 mm beträgt.

5. Abdeckvorrichtung für Installationsgeräte nach Anspruch 2,
**dadurch gekennzeichnet, dass** die Seitenwände des Etikettenschutzes zwei seitlich verlaufende Wände (18, 19) und eine quer verlaufende Wand (20) umfassen.

6. Abdeckvorrichtung für Installationsgeräte nach Anspruch 5,
**dadurch gekennzeichnet, dass** die Befestigungsorgane des Etikettenschutzes an den seitlich verlaufenden Wänden (18, 19) in Bereichen (18A, 19A) ausgebildet sind, welche die seitlich verlaufenden Wände mit der quer verlaufenden Wand (20) verbinden, und in einem Bereich (20A) in der Mitte der quer verlaufenden Wand (20).

7. Abdeckvorrichtung für Installationsgeräte nach Anspruch 5,
**dadurch gekennzeichnet, dass** die quer verlaufende Wand (20) des Etikettenschutzes (7) einen dünneren Bereich mit variabler Dicke umfasst, die ausgehend von dem verjüngten Bereich (22) zunimmt.

8. Abdeckvorrichtung für Installationsgeräte nach Anspruch 7,
**dadurch gekennzeichnet, dass** sich der dünnere Bereich in Bereichen (20B, 20C) beiderseits eines schmalen Streifens (20A) in der Mitte der quer verlaufenden Wand (20) bis zu den Verbindungsbereichen (18A, 19A) erstreckt, die an die seitlich verlaufenden Wände (18, 19) angrenzen.

9. Abdeckvorrichtung für Installationsgeräte nach einem der vorhergehenden Ansprüche,
**dadurch gekennzeichnet, dass** die Innenseite der Stirnwand (17) des Etikettenschutzes (7) wenigstens einen vorspringenden Zapfen (21) aufweist, der die Stirnwand (17) von der Fläche der Stirnwand (8) der Zierkappe mit einem für ein einfacheres Einführen eines Etiketts ausreichenden Abstand entfernt hält und dieses nach seiner Anbringung hält.
